**Europäisches Patentamt**

**European Patent Office**

**Office européen des brevets**

(11) Veröffentlichungsnummer: **0 205 985**
B1

# (12) EUROPÄISCHE PATENTSCHRIFT

(45) Veröffentlichungstag der Patentschrift:
**18.01.89**

(51) Int. Cl.⁴: **B23Q 5/58,** B23K 9/28,
H01H 3/16

(21) Anmeldenummer: **86107358.3**

(22) Anmeldetag: **30.05.86**

(54) **Vorrichtung zur Sicherheitsabschaltung für maschinell bewegte Werkzeuge, insbesondere automatische Schweisspistolen.**

(30) Priorität: **07.06.85 DE 3520562**

(43) Veröffentlichungstag der Anmeldung:
**30.12.86 Patentblatt 86/52**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**DE-U- 8 519 446**
**FR-A- 2 524 364**
**GB-A- 2 068 891**
**US-A- 3 169 619**
**US-A- 4 332 066**
**US-A- 4 514 616**

(73) Patentinhaber: **Dinse, Wilhelm, Königsreihe 12,
D-2000 Hamburg 70(DE)**

(72) Erfinder: **Dinse, Wilhelm, Königsreihe 12,
D-2000 Hamburg 70(DE)**

(74) Vertreter: **von Raffay, Vincenz, Dipl.-Ing. et al,
Patentanwälte Raffay, Fleck & Partner
Postfach 32 32 17, D-2000 Hamburg 13(DE)**

## Beschreibung

Die Erfindung betrifft eine Vorrichtung nach dem Oberbegriff des Anspruches 1.

Derartige Vorrichtungen, die für die unterschiedlichsten Anwendungsfälle eingesetzt werden können, sind in den verschiedensten Ausgestaltungen bekannt. Bei der Anordnung von Schweißpistolen an Schweißautomaten, beispielsweise an sog. Roboterarmen, sind Vorrichtungen nach dem Oberbegriff des Anspruches 1 bekannt. Diese Vorrichtungen müssen so gestaltet sein, daß die Taumelplatte, die vorzugsweise das Werkzeug, nämlich die Schweißpistole trägt und das Montagegehäuse, das an der entsprechenden Werkzeugmaschine befestigt ist, allseitig ungehindert – lediglich unter Spannung der Federn – bewegbar ist und daß diese Bewegung für eine sichere Betätigung des Schalters und damit zu einer Unterbrechung der Arbeit der entsprechenden Werkzeugmaschine sorgt. Der Schalter muß, um Zerstörungen zu vermeiden, schnell und leicht ansprechen, wobei die Bewegung der Taumelplatte nach dem Schaltvorgang noch im Sinne eines Nachlaufs fortgesetzt werden muß.

Bei dieser Bewegung zwischen Taumelplatte und Montagegehäuse darf eine Drehbewegung nicht stattfinden, d.h. die beiden Teile müssen gegen Drehung gesichert sein. Der Erfindung liegt nun die Aufgabe zugrunde, diese Drehsicherung so auszugestalten, daß die erwünschte Relativbewegung durch die Drehsicherung nicht behindert wird. Insbesondere, wenn die Bewegung zwischen Montagegehäuse und Taumelplatte nicht genau in Achsrichtung sondern im Sinne einer Verkantung stattfindet, soll die Relativbewegung dennoch ungehindert, leicht und über den gesamten, möglichen Hubbereich stattfinden.

Diese Aufgabe wird durch das Kennzeichen des Anspruches 1 gelöst.

Dadurch, daß ein oder mehrere federbelastete Bolzen vorgesehen sind, die also gegen die Vorspannung der Feder nachgeben können und deren Köpfe vorzugsweise kugelförmig ausgebildet sind, kann die Relativbewegung zwischen Taumelplatte und Montagegehäuse ungehindert stattfinden, und zwar auch dann, wenn die Taumelplatte verkantet wird, d.h. wenn diese unsymmetrisch belastet und damit auch nicht in Achsrichtung bewegt wird. Da das Werkzeug, das vorzugsweise an der Taumelplatte befestigt ist, beim Anstoßen an ein Hindernis ein großes Moment auf die Taumelplatte ausübt, wird diese in den allermeisten Fällen nicht in Achsrichtung bewegt, sondern verkantet. Die besondere Ausgestaltung und Anordnung der Bolzen ermöglicht dennoch eine leichte und ungehinderte Bewegung im Bereich des Hubes, der durch die Abmessungen von Taumelplatte und Montagegehäuse zugelassen ist.

In vorteilhafter Weise kann die Vorrichtung so ausgestaltet sein, wie in den Ansprüchen 2 und 3 angegeben. Insbesondere die Anordnung von zwei Bolzen, die einander gegenüberliegen (der Winkel zwischen ihnen beträgt 180°) ermöglicht eine einerseits drehsichere Lagerung, die andererseits aber eine ungehinderte Bewegung "Schaltrichtung" zuläßt.

Im folgenden wird die Erfindung unter Hinweis auf die Zeichnung anhand eines Ausführungsbeispieles näher erläutert.

Es zeigt:

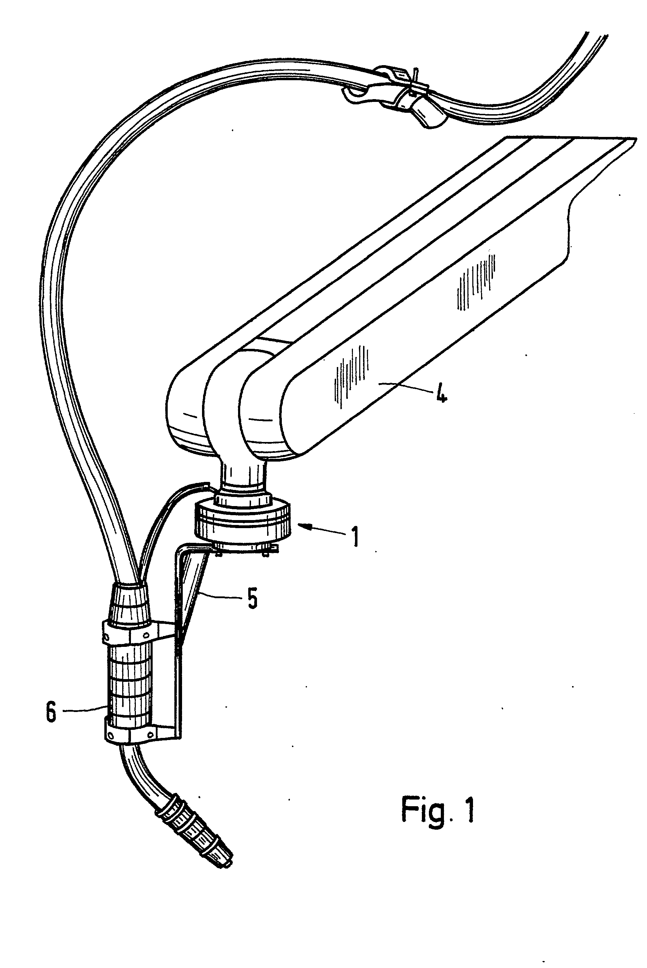

Fig. 1 eine perspektivische Ansicht einer Schweißvorrichtung mit einer Vorrichtung zur Sicherheitsabschaltung nach der Erfindung;

Fig. 2 einen Längsschnitt durch die Vorrichtung zur Sicherheitsabschaltung, die bei der Ausführungsform nach Fig. 1 eingebaut ist; und

Fig. 3 einen Schnitt gemäß der Linie III–III der Fig. 2.

Die in der Zeichnung dargestellte Schweißvorrichtung besteht aus einem Arm 4, einem sog. Roboterarm, an der Werkzeugmaschine. An dem Ende dieses Armes ist die Vorrichtung zur Sicherheitsabschaltung angebracht, die allgemein mit 1 bezeichnet ist. Über einen Bügel 5 ist eine Schweißpistole 6 an dieser Vorrichtung 1 befestigt.

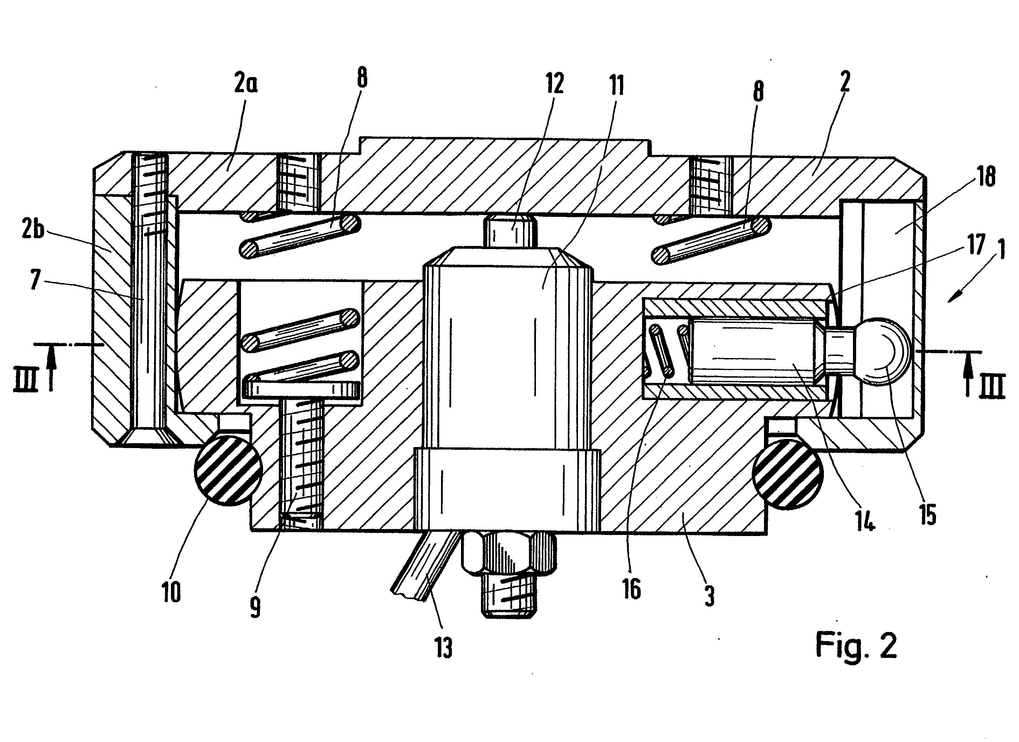

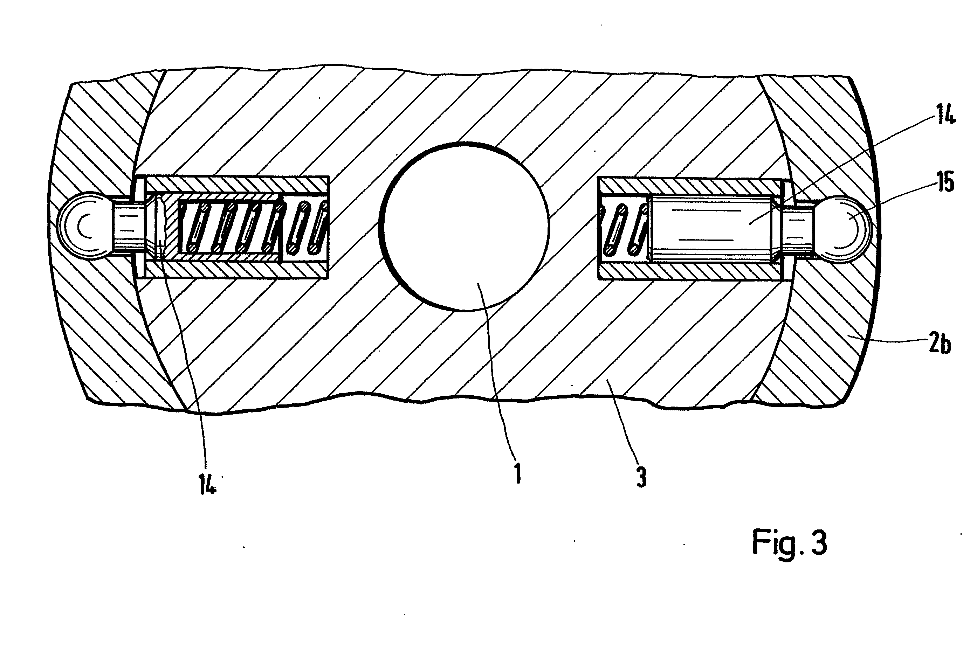

In den Fig. 2 und 3 ist die Vorrichtung 1 im einzelnen dargestellt. Sie besteht aus einem Montagegehäuse 2, das wiederum aus einer Montageplatte 2a und einem Ring 2b gebildet ist. Diese beiden Teile 2a und 2b sind durch Schrauben 7 fest miteinander verbunden.

In dem durch die Teile 2a und 2b gebildeten Montagegehäuse 2 ist eine Taumelplatte 3 gelagert, deren Außenwand 17 kugelförmig ist. Zwischen der Taumelplatte 3 und dem Montagegehäuse 2 sind vier Druckfedern 8 angeordnet, die diese beiden Teile auseinanderdrücken. Grundsätzlich können auch ein oder mehrere andere Federelemente verwendet werden. Diese Federn 8 sind durch Schrauben 9 verstellbar. Ein Dichtungsring 10 schützt den durch die Taumelplatte 3 und das Montagegehäuse 2 gebildeten Innenraum.

In der Taumelplatte 3 ist ein Schalter 11 mit einem Schaltelement 12 befestigt. Das zu diesem Schalter führende elektrische Kabel ist mit 13 bezeichnet.

Weiterhin sind im Bereich der Außenwand 17 der Taumelplatte 3 zwei Bolzen 14 gelagert, die durch Federn 16 vorgespannt sind. Die Bolzen 14 weisen über den Außenumfang der Taumelplatte 3 vorstehende Kugelköpfe 15 auf. Diese Kugelköpfe sind in Nuten 18 geführt, die in den Teilen 2b des Montagegehäuses ausgebildet sind und in Richtung der vorgesehenen Relativbewegung zwischen den beiden Teilen 2 und 3 verlaufen.

Wenn die Schweißpistole 6 im Betrieb auf ein Hindernis stößt, so erzeugt die entsprechende Kraft ein auf die Taumelplatte 3 wirkendes Moment. Dieses Moment bewegt die Platte an der entsprechenden Außenkante in Richtung auf die Montageplatte 2a des Montagegehäuses 2. Hierbei wird die entsprechende Feder 8 zusammengedrückt. Entsprechend der Einstellung des Schaltelementes 12 des Schalters 11, wird dieser relativ feinfühlig und schnell betätigt. Die Bewegung der Taumelplatte 3 kann sich anschließend an den Schaltvorgang noch fortsetzen. Der Eingriff der Kugelköpfe 15 in die Nuten 18 verhindert eine Drehung zwischen der Taumelplatte 3 und dem Montagegehäuse 2. Durch den Verlauf der Nuten 18 und die kugelförmige Ausbildung der Köpfe 15 wird die erwünschte Relativbewegung zwischen den beiden Teilen 2 und 3, die den Schaltvorgang auslöst und einen gewissen Nachlauf sicherstellt, nicht behindert, und zwar auch dann nicht, wenn die Taumelplatte 3 aufgrund des ausgeübten Momentes kippt und verkantet. Wie ungünstig die ausgelöste Belastung auch immer ist, der Schaltvorgang wird sicher ausgelöst, der Nachlauf kann ungehindert stattfinden, und die Taumelplatte 3 kann sich nach Entlastung wieder in ihre Ausgangsstellung zurückbewegen.

Die Vorrichtung zur Sicherheitsabschaltung wurde in Verbindung mit einer Schweißmaschine beschrieben. Es ist einzusehen, daß diese Vorrichtung auch in Verbindung mit anderen, maschinell bewegten Werkzeugen eingesetzt werden kann. Dies gilt insbesondere für alle Anwendungsfälle, bei denen das entsprechende Werkzeug auf die Taumelplatte ein relativ großes Moment erzeugt und diese im Sicherheitsfall ungleichmäßig belastet und damit gekippt und verkantet wird.

**Patentansprüche**

1. Vorrichtung (1) zur Sicherheitsabschaltung für maschinell bewegte Werkzeuge, insbesondere automatische Schweißpistolen (6), mit einer Taumelplatte (3) und einem Montagehäuse (2), zwischen denen mindestens ein oder mehrere Federelemente (8) angeordnet sind, und einem durch die Relativbewegung zwischen Montagegehäuse betätigten Schalter (11), dadurch gekennzeichnet, daß im Bereich der vorzugsweise kugelförmigen Außenwand (17) der Taumelplatte (3) ein oder mehrere federbelastete Bolzen (14) angeordnet sind, deren Köpfe (15) in Nuten (18) geführt sind, die in der angrenzenden Innenwand des Montagehäuses in Bewegungsrichtung der Taumelplatte verlaufen.

2. Vorrichtung nach Anspruch 1, dadurch gekennzeichnet, daß die Köpfe (15) der Bolzen (14) kugelförmig ausgebildet sind.

3. Vorrichtung nach Anspruch 1 oder 2, dadurch gekennzeichnet, daß zwei Bolzen (14) vorgesehen sind, die einander gegenüberliegen.

**Claims**

1. Apparatus (1) for safety stoppage of mechanically moved tools, particularly automatic welding guns (6), with a swashplate (3) and an assembly casing (2), between which are arranged at least one or more spring elements (8) and a switch (11) operated by the relative movement between swashplate and assembly casing, characterized in that in the area of the preferably spherical outer wall (17) of the swashplate (3) are provided one or more springloaded bolts (14), whose heads (15) are guided in grooves (18) which run in the movement direction of the swashplate in the adjacent inner wall of the assembly casing.

2. Apparatus according to claim 1, characterized in that the heads (15) of the bolts (14) are spherical.

3. Apparatus according to claims 1 or 2, characterized in that two bolts (14) are provided, which are opposite one another.

**Revendications**

1. Dispositif de déconnexion de sécurité destiné aux outils mus mécaniquement, notamment aux pistolets à souder automatiques (6), muni d'une plaque en nutation (3) et d'un boîtier de montage (2) entre lesquels sont aménagés un au minimum ou plusieurs éléments à resort (8), et d'un interrupteur (11) actionné par le mouvement relatif entre le boîtier de montage, caractérisé en ce qu'un ou plusieurs boulons sous l'action d'un ressort (14) sont aménagés dans la zone de la paroi extérieure de préférence sphérique (17) de la plaque en nutation (3) et dont les têtes (15) sont conduites dans des rainures (18) qui suivent la direction de mouvement de la plaque en nutation dans la paroi intérieure avoisinante du boîtier de montage.

2. Dispositif selon la revendication 1, caractérisé en ce que les têtes (15) des boulons (14) sont développées en forme de boule.

3. Dispositif selon la revendication 1 ou 2, caractérisé en ce que deux boulons (14) sont prévus qui se trouvent l'un en face de l'autre.

Fig. 1

Fig. 2

EP 0 205 985 B1

Fig. 3

EP 0 205 985 B1